(19) Europäisches Patentamt
European Patent Office
Office européen des brevets

(11) **EP 4 693 792 A1**

(12) **EUROPEAN PATENT APPLICATION**

(43) Date of publication:
**11.02.2026 Bulletin 2026/07**

(21) Application number: **25173501.5**

(22) Date of filing: **30.04.2025**

(51) International Patent Classification (IPC):
*H02J 3/06* (2026.01)    *H02J 3/32* (2026.01)
*H02J 3/38* (2026.01)    *G06Q 10/04* (2023.01)
*G06Q 50/06* (2024.01)    *G06Q 10/0631* (2023.01)

(52) Cooperative Patent Classification (CPC):
**H02J 3/381; G06Q 10/04; G06Q 10/0631;
G06Q 50/06; H02J 3/06; H02J 3/32;** H02J 2203/10;
H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.08.2024 CN 202411077993**

(71) Applicant: **Chuxiong Power Supply Bureau of
Yunnan Power Grid Co., Ltd.
Chuxiong City Yunnan 675099 (CN)**

(72) Inventors:
• **DENG, Zhengdong
Chuxiong City, 675099 (CN)**
• **ZHU, Xiaoli
Chuxiong City, 675099 (CN)**
• **LEI, Xuannian
Chuxiong City, 675099 (CN)**
• **YANG, Jindong
Chuxiong City, 675099 (CN)**
• **LIU, Xiaoming
Chuxiong City, 675099 (CN)**

• **QIU, Chengfei
Chuxiong City, 675099 (CN)**
• **LIU, Shifang
Chuxiong City, 675099 (CN)**
• **WANG, Yaoqiang
Chuxiong City, 675099 (CN)**
• **XU, Delin
Chuxiong City, 675099 (CN)**
• **HU, Yan
Chuxiong City, 675099 (CN)**
• **LI, Sichen
Chuxiong City, 675099 (CN)**
• **XIAO, Haiyi
Chuxiong City, 675099 (CN)**
• **LI, Zhichao
Chuxiong City, 675099 (CN)**
• **JIANG, Chengen
Chuxiong City, 675099 (CN)**
• **LIU, Fujin
Chuxiong City, 675099 (CN)**

(74) Representative: **Patent 42
5, rue Dicks
4081 Esch-zur-Alzette (LU)**

(54) **SELF-ADAPTIVE OPTIMIZATION SCHEDULING METHOD APPLIED TO FLEXIBLE INTERCONNECTED LOW-VOLTAGE POWER DISTRIBUTION REGION**

(57) A self-adaptive optimal dispatching method is applied to the flexible interconnected low-voltage power distribution regions, which includes : firstly, classifying the operating states of the system based on the voltage deviation during the system operation process; secondly, establishing a multi-objective optimization model for the safety, economy and reliability of the system operation; based on different operating states of the system, constructing the weight coefficients of the multi-objective optimization function according to the range of the voltage deviation; finally, designing a second-order cone optimization method with gradually tightening relaxation gaps, which can quickly and accurately obtain the optimal dispatching scheme for the flexible interconnected low-voltage distribution stations.

FIG. 5

EP 4 693 792 A1

## Description

### TECHNICAL FIELD

The present application relates to the technical field of optimized schedule for low-voltage power distribution regions, and particularly to a self-adaptive optimization scheduling method applied to a flexible interconnected low-voltage power distribution region.

### BACKGROUND

Through the flexible interconnection method, multiple power distribution regions in the same regional distribution network are interconnected and supply power to each other at low voltage. With the help of flexible power electronic devices, power mutual assistance and reactive power support between different distribution regions are achieved. The flexible interconnection method for distribution regions based on converters has no simple concept of "on" and "off" compared to traditional switches, and overcomes the limitation of the number of operations of traditional mechanical switches during operation, and has the functions of continuously and controllably transferring active power, providing reactive power, and accurately and quickly recovering from faults to achieve self-healing, and has the characteristics of diverse switching of operation modes and flexible and reliable control methods, and is expected to play a huge role in the current distribution network. In order to fully utilize the advantages of the Soft Open Point (SOP) during operation and achieve the economic and reliable operation of the power system, it is necessary to optimize the scheduling of the flexible interconnected low-voltage power distribution region.

At present, the optimization scheduling problem of low-voltage power distribution regions with SOP usually adopts multi-objective programming, and the multi-objective programming is transformed and solved by means such as the single-objective transformation method, the multi-objective optimization method based on the Pareto theory, and the multi-objective optimization method based on the game theory. When using the Pareto theory to solve multi-objective problems, the utilization rate of the entire solution space is not high, and it is easy to fall into local optimal solutions; game theory uses mathematical and operational research methods to study the decision-making of decision-making subjects when their behaviors have direct interactions and the equilibrium problems of such decisions, but the model and solution are relatively complex and are restricted by rationality assumptions and premise assumptions; the traditional single-objective transformation method transforms multi-objective problems into single-objective problems through weighted summation, and due to the subjective influence of the selection of weight parameters, it is difficult to obtain the optimal solution.

Based on the above analysis, in order to avoid the influence of human factors in the process of determining the multi-objective weights, enhance the credibility and objectivity of weighting, the present application proposes a self-adaptive optimization scheduling method applied to a flexible interconnected low-voltage power distribution region. This method updates the weight coefficients of different optimization objectives in real time and dynamically based on the system operation status and voltage fluctuations. On the basis of ensuring the system stability, it has better economic performance. And during the solution process, the penalty term of gradually shrinking the adaptive relaxation gap is adopted, which can accelerate the solution speed on the basis of ensuring that the constraints are met.

### SUMMARY

The present application aims at the problem of optimized operation of flexible interconnected low-voltage power distribution regions. Taking the economy, stability and reliability of the operation of the distribution region as the optimization objectives, it overcomes the influence of subjectively determined weight coefficients on the optimized scheduling scheme, and provides a reliable operation scheme for the economic and stable operation of flexible interconnected low-voltage power distribution regions.

The technical solution adopted in the present application:

A self-adaptive optimization scheduling method applied to a flexible interconnected low-voltage power distribution region, including:

Step 1: classifying an operation status of a system based on a maximum voltage deviation range of each distribution region in the system, and considering requirements of different operation statuses, formulating an optimization scheduling scheme of the system within different voltage ranges;

Step 2: taking a voltage deviation of each distribution region, an operation cost considering an operation network loss, and a user satisfaction on a load side as an optimization objectives, and taking power constraints of controllable devices in the system, a system operation power flow constraint, and a system operation safety constraint as constraint conditions to construct a multi-objective optimization scheduling model;

Step 3: constructing a method for determining a self-adaptive weight coefficient of the multi-objective optimization function according to requirements of the system operation status in an actual operation process and an influence of a voltage deviation on the system operation;

Step 4: iteratively solving an optimization model to obtain the optimization scheduling scheme after converting the optimization model into a second-order cone programming model with a self-adaptive relaxation gap.

In one embodiment, in step 1, the operation status of the system is classified by monitoring the maximum voltage deviation on a high-voltage side of a transformer in each distribution region;

the operation status of the system is divided into a normal voltage status, a voltage warning status, and a secondary voltage recovery status.

In one embodiment, the requirements under different operation statuses of the system are as follows:

when the system is in the normal voltage status, the system has sufficient economic scheduling margin, the optimization objective mainly considers economy;

when the system is in the voltage warning status, although a voltage fluctuation is within an allowable range, any external interference will cause the voltage deviation of the system to deviate from the allowable range, threatening a safe operation of the system, the optimization objective is mainly to ensure voltage stability, while considering the economy;

when the system is in the secondary voltage recovery status, emergency measures such as load shedding need to be taken to restore a voltage of the system to the normal or warning status, the optimization objective is to ensure the requirements of the user satisfaction as much as possible on a premise of ensuring the voltage deviation of the system.

In one embodiment, in step 2, an optimization calculation formula of the multi-objective optimization scheduling model is as follows:

$$\min F = \alpha_1 F_1 / F_{1,0} + \alpha_2 F_2 / F_{2,0} + \alpha_3 F_3 / F_{3,0} \; ;$$

where, $F$ represents an overall optimization objective function and $\min F$ represents a minimization optimization objective function; $F_1$, $F_2$ and $F_3$ respectively represent taking voltage deviation, a system operation cost and the user satisfaction as objective functions of the optimization objectives; $F_{1,0}$, $F_{2,0}$ and $F_{3,0}$ respectively represent the voltage deviation value, the system operation cost and the user satisfaction obtained before optimization; $\alpha_1$, $\alpha_2$ and $\alpha_3$ represent weight coefficients of different optimization objectives respectively;

wherein,

$$F_1 = \sum_{k=1}^{m} \left| U_k^2(t) - 1 \right|$$

$$F_2 = C_{\text{pur}} + C_{\text{DG}} + C_{\text{loss}} + C_{\text{ESS}}$$

$$F_3 = c_{\text{load}} \Delta P_{\text{load}} = c_{\text{load}} \left| P_{\text{u}}^{\text{tr}}(t) - P_{\text{d}}^{\text{tr}}(t) - P_{\text{d}}^{\text{in}}(t) \right|$$

where m represents a total number of distribution regions; $U_k(t)$ represents a voltage value on the high-voltage side of the transformer in a k-th distribution region at time t; $C_{\text{pur}}$ represents a power purchase cost from the distribution region to an upper grid; $C_{\text{DG}}$ represents a cost of wind and light abandonment for distributed energy; $C_{\text{loss}}$ represents a power loss cost of the system; $C_{\text{ESS}}$ represents a charge and discharge cost of energy storage; $\Delta P_{\text{load}}$ represents a fluctuation amount of a flexible load active power; $P_{\text{u}}^{\text{tr}}(t)$ represents a transferable load increased at time t; $P_{\text{d}}^{\text{tr}}(t)$ represents a reducible load reduced at time t; $P_{\text{d}}^{\text{in}}(t)$ represents a transferable load reduced at time t; $c_{\text{load}}$ represents a cost of compensation for load changes.

In one embodiment, the power purchase cost $C_{pur}$ of the distribution region to the upper grid, a wind and light abandonment cost $C_{DG}$ of distributed energy, the power loss cost $C_{loss}$ of the system and the charging and discharging cost $C_{ESS}$ of energy storage are calculated;

$$C_{pur} = \sum_{t=1}^{24} price(t)P_{grid}(t)$$

$$C_{DG} = \sum_{t=1}^{24} c_{DG} \sum_{i=1}^{N} \left[ \left( P_{wt}'(t) - P_{i,wt}(t) \right) + \left( P_{pv}'(t) - P_{i,pv}(t) \right) \right]$$

$$C_{loss} = \sum_{t=1}^{24} price(t) \sum_{i,j \in \phi_1} I_{ij}^2(t)R_{ij}$$

$$C_{ESS} = K_{ess} \sum_{t=1}^{24} \sum_{i=1}^{n} \left( P_{i,dis}(t) + P_{i,ch}(t) \right)$$

where a time-of-use electricity price $price(t)$ represents the real-time electricity price at t time; $P_{grid}(t)$ represents the active power transmitted from the upper grid to the distribution region at t time; N represents a number of a photovoltaic generator set and fans installed; $P_{wt}'(t)$ and $P_{i,wt}(t)$ respectively represent the active power emitted by the i-th fan at time t and the active power actually injected into the node; $P_{pv}'(t)$ and $P_{i,pv}(t)$ respectively represent an active power generated by the i-th photovoltaic power supply at t time and an active power actually utilized; $K_{ess}$ represents a cost coefficient of energy storage charging and discharging; **N** represents a number of energy storage installations; $P_{i,dis}(t)$ and $P_{i,ch}(t)$ respectively represent the charging and discharging power of the i-th energy storage device at t time; $\phi_1$ represents a set of all branches in the system; $I_{ij}$ and $R_{ij}$ represent a current and a resistance on tie lines of a region i and a region j, respectively.

In one embodiment, in step 2, the constraints of the multi-objective optimization model comprise:

involving a state constraint, power constraint and capacity constraint of the energy storage;
involving the upper and lower limits of output of wind and solar power units of distributed energy;
involving capacity and transmission power constraints at different ports of a flexible interconnect device;
for a whole system, involving the system power flow constraints and safety constraints including voltage and current.

In one embodiment, in step 3, constructing a method for determining a self-adaptive weight coefficient of the multi-objective optimization function according to requirements of the system operation status in an actual operation process and an influence of a voltage deviation on the system operation;
when the system is in the normal voltage operation, the weight factor is set to:

$$\begin{cases} \alpha_1 = \varepsilon_1 + \varepsilon_2 \dfrac{F_{1,max,0}}{U_{max}^2 - U_{min}^2} \\ \alpha_3 = 0 \end{cases}$$

$$\alpha_1 + \alpha_2 + \alpha_3 = 1$$

when the system is in the voltage warning state, the weight coefficient is set as:

$$\begin{cases} \alpha_1 = \varepsilon_1 + \varepsilon_2 \dfrac{F_{1,\max,0}}{U_{\max}^2 - U_{\min}^2} \\ \alpha_2 = \alpha_1 / 2 \\ \alpha_3 = 0 \end{cases}$$

when the system is in the secondary voltage recovery state, the weight coefficient is set to:

$$\begin{cases} \alpha_1 = \varepsilon_1 + \varepsilon_2 \dfrac{F_{1,\max,0}}{U_{\max}^2 - U_{\min}^2} \\ \alpha_2 = 0 \end{cases}$$

$$\alpha_1 + \alpha_2 + \alpha_3 = 1$$

where, $\alpha_1$, $\alpha_2$ and $\alpha_3$ respectively represent the weight coefficients of different optimization objectives; $\varepsilon_1$ and $\varepsilon_2$ represent a voltage deviation weighting coefficient and a voltage deviation linearization coefficient, respectively; $F_{1,\max,0}$ represents an optimized objective value considering voltage deviation at a node with maximum voltage deviation at t time before optimization; $U_{\max}$ and $U_{\min}$ represent a maximum and minimum voltage values, respectively.

In one embodiment, in step 4, converting the model into a second-order cone programming model with a gradually tightened relaxation gap:

by adding a penalty term based on the second-order cone relaxation gap in the optimization objective and adding a cutting plane in the constraint conditions, ensuring that each iterative solution process is able to adapt to a relaxation gap of the model after the second-order cone transformation, accelerating a solution speed to ensure a solution accuracy.

In one embodiment, the self-adaptive optimization scheduling method applied to the flexible interconnected low-voltage power distribution region selects a back-to-back power source converter as the flexible interconnection device between distribution regions;

in a typical back-to-back type SOP, the AC sides are connected to different distribution regions, and the DC sides of the VSCs are interconnected back-to-back to realize an active power exchange of the interconnected distribution regions, and a reactive power of each VSC is independent of each other, which can provide voltage and reactive power support for the connected feeder lines;

under normal circumstances, one of the VSCs adopts a constant DC voltage and a constant reactive power control mode, and remaining VSCs adopt the constant active power and a constant reactive power control mode;

each VSC in the SOP is operatable in a four-quadrant mode, but its operating power shall not exceed its rated power; the operation constraints of the back-to-back type SOP is expressed as:

$$\sqrt{P_{\mathrm{vsc}r}(t)^2 + Q_{\mathrm{vsc}r}(t)^2} \le S_{\mathrm{vsc}\,\max\,r}$$

$$\sum_{r=1}^{n} P_{\mathrm{vsc}r}(t) = 0$$

where $P_{vscr}(t)$ and $Q_{vscr}(t)$ represent the active power and reactive power of the r-th port VSC at t time; $S_{vsc\,max\,r}$ represents a rated power of the r-th VSC; N is a number of ports;

IEEE 33 nodes are used as a test system to verify the effectiveness and practicability of the self-adaptive optimization scheduling method applied to the flexible interconnected low-voltage power distribution region.

**The** beneficial effects of the present application are as follows:

the self-adaptive optimization scheduling method applied to a flexible interconnected low-voltage power distribution region is suitable for application scenarios where a large number of distributed energy sources and loads are connected. Different low-voltage power distribution regions within the distribution network region are connected through flexible interconnection devices to achieve real-time optimized scheduling. Based on the system operation status and voltage fluctuations, this method updates the weight coefficients of different optimization objectives in real time and dynamically. On the basis of ensuring the system stability, it has better economic performance. And during the solution process, by adopting the penalty term of gradually shrinking the adaptive relaxation gap, the solution speed can be accelerated while ensuring that the constraints are satisfied. Compared with traditional multi-objective optimization algorithms, the method of the present application has superiority and applicability, and can adjust the weight coefficients of the optimization objectives in real time according to the operation status of the system, so as to ensure the economy of the optimized scheduling scheme on the basis of achieving high reliability.

## BRIEF DESCRIPTION OF THE DRAWINGS

FIG. 1 is a schematic diagram of a workflow of a self-adaptive optimization scheduling method applied to a flexible interconnected low-voltage power distribution region of the present application.

FIG. 2 is a topological structure diagram of the flexible interconnection device applied to the flexible interconnected low-voltage power power distribution region provided in the embodiment of the present application.

FIG. 3 is a system structure diagram modified according to IEEE 33 nodes in the adaptive optimization scheduling method applied to the flexible interconnected low-voltage power distribution region provided in the embodiment of the present application.

FIG. 4 is an output voltage diagram of the high-voltage side of the transformer in each distribution region obtained by the optimization scheduling strategy of the system without using the flexible interconnection device applied to the low-voltage power power distribution region provided in the embodiment of the present application.

FIG. 5 is an output voltage diagram of the high-voltage side of the transformer in each distribution region obtained by the optimized operation strategy with fixed weight coefficients applied to the flexible interconnected low-voltage power distribution region provided in the embodiment of the present application.

FIG. 6 is an output voltage diagram of the high-voltage side of the transformer in each distribution region obtained by the optimized scheduling strategy of the adaptive system operation state proposed by the present application applied to the flexible interconnected low-voltage power distribution region provided in the embodiment of the present application.

## DETAILED DESCRIPTION OF THE EMBODIMENTS

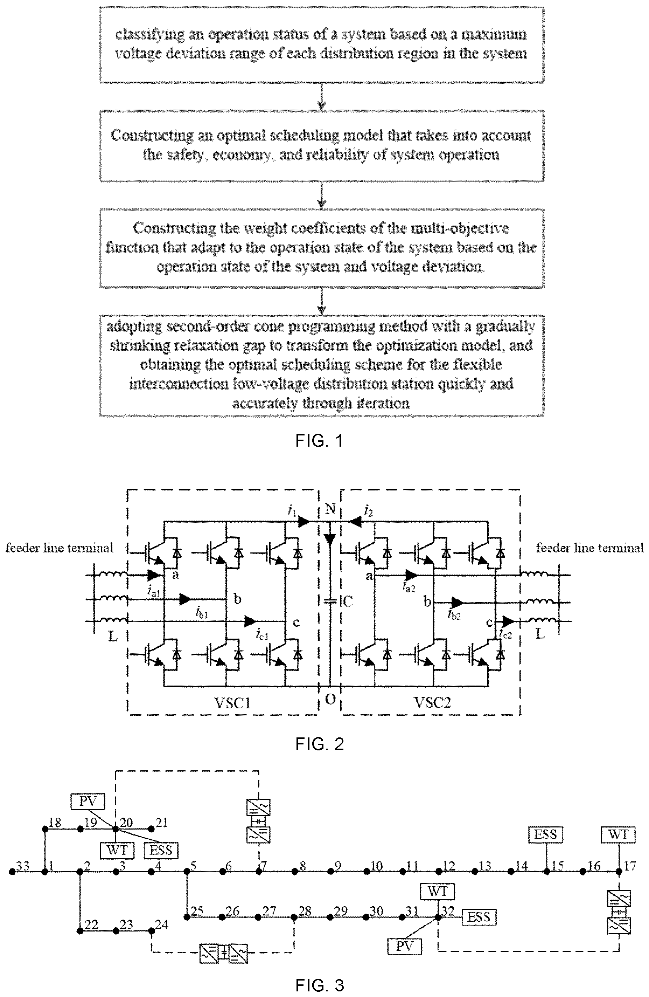

The following will clearly and completely describe the technical solutions in the embodiments of the present application with reference to the accompanying drawings of the embodiments of the present application. Obviously, the described embodiments are only a part of the embodiments of the present application, rather than all of the embodiments. Based on the embodiments of the present application, all other embodiments obtained by those skilled in the art without creative efforts shall fall within the protection scope of the present application. This embodiment proposes a self-adaptive optimization scheduling method applied to a flexible interconnected low-voltage power power distribution region. As shown in FIG. 1, the self-adaptive optimization scheduling method applied to the flexible interconnected low-voltage power power distribution region includes the following steps:

Step 1: classifying an operation status of a system based on a maximum voltage deviation range of each distribution region in the system, and considering requirements of different operation statuses, formulating an optimization scheduling scheme of the system within different voltage ranges.

Specifically, the operation status of the system is divided into a normal voltage status, a voltage warning status, and a secondary voltage recovery status.

Step 2: taking a voltage deviation of each distribution region, an operation cost considering an operation network loss, and a user satisfaction on a load side as an optimization objectives. and taking power constraints of controllable devices in the system, a system operation power flow constraint, and a system operation safety constraint as constraint conditions to construct a multi-objective optimization scheduling model.

The requirements under different operation statuses of the system are as follows:

when the system is in the normal voltage status, the system has sufficient economic scheduling margin, the optimization objective mainly considers economy;

when the system is in the voltage warning status, although a voltage fluctuation is within an allowable range, any external interference will cause the voltage deviation of the system to deviate from the allowable range, threatening a safe operation of the system, the optimization objective is mainly to ensure voltage stability, while considering the economy;

when the system is in the secondary voltage recovery status, emergency measures such as load shedding need to be taken to restore a voltage of the system to the normal or warning status, the optimization objective is to ensure the requirements of the user satisfaction as much as possible on a premise of ensuring the voltage deviation of the system.

In order to ensure the economy, stability and reliability of operation, safety and economy are taken as the optimization objectives.

an optimization calculation formula of the multi-objective optimization scheduling model is as follows:

$$\min F = \alpha_1 F_1 / F_{1,0} + \alpha_2 F_2 / F_{2,0} + \alpha_3 F_3 / F_{3,0} \,;$$

where $F$ represents an overall optimization objective function and $\min F$ represents a minimization optimization objective function; $F_1$, $F_2$ and $F_3$ respectively represent taking voltage deviation, a system operation cost and the user satisfaction as objective functions of the optimization objectives; $F_{1,0}$, $F_{2,0}$ and $F_{3,0}$ respectively represent the voltage deviation value, the system operation cost and the user satisfaction obtained before optimization; $\alpha_1$, $\alpha_2$ and $\alpha_3$ represent weight coefficients of different optimization objectives respectively;

wherein

$$F_1 = \sum_{k=1}^{m} \left| U_k^2(t) - 1 \right|$$

$$F_2 = C_{\text{pur}} + C_{\text{DG}} + C_{\text{loss}} + C_{\text{ESS}}$$

$$F_3 = c_{\text{load}} \Delta P_{\text{load}} = c_{\text{load}} \left| P_{\text{u}}^{\text{tr}}(t) - P_{\text{d}}^{\text{tr}}(t) - P_{\text{d}}^{\text{in}}(t) \right|$$

where m represents a total number of distribution regions; $U_k(t)$ represents a voltage value on the high-voltage side of the transformer in a k-th distribution region at time t; $C_{\text{pur}}$ represents a power purchase cost from the distribution region to an upper grid; $C_{\text{DG}}$ represents a cost of wind and light abandonment for distributed energy; $C_{\text{loss}}$ represents a power loss cost of the system; $C_{\text{ESS}}$ represents a charge and discharge cost of energy storage; $\Delta P_{\text{load}}$ represents a fluctuation amount of a flexible load active power; $P_{\text{u}}^{\text{tr}}(t)$ represents a transferable load increased at time t; $P_{\text{d}}^{\text{tr}}(t)$ represents a reducible load reduced at time t; $P_{\text{d}}^{\text{in}}(t)$ represents a transferable load reduced at time t; $c_{\text{load}}$ represents a cost of compensation for load changes.

This embodiment also provides the power purchase cost $C_{\text{pur}}$ of the distribution region to the upper grid, a wind and light abandonment cost $C_{\text{DG}}$ of distributed energy, the power loss cost $C_{\text{loss}}$ of the system and the charging and discharging cost $C_{\text{ESS}}$ of energy storage are calculated;

$$C_{\text{pur}} = \sum_{t=1}^{24} price(t) P_{\text{grid}}(t)$$

$$C_{\text{DG}} = \sum_{t=1}^{24} c_{\text{DG}} \sum_{i=1}^{N} \left[ \left( P_{\text{wt}}'(t) - P_{i,\text{wt}}(t) \right) + \left( P_{\text{pv}}'(t) - P_{i,\text{pv}}(t) \right) \right]$$

$$C_{\text{loss}} = \sum_{t=1}^{24} price(t) \sum_{i,j \in \phi_1} I_{ij}^2(t) R_{ij}$$

$$C_{\text{ESS}} = K_{\text{ess}} \sum_{t=1}^{24} \sum_{i=1}^{n} \left( P_{i,\text{dis}}(t) + P_{i,\text{ch}}(t) \right)$$

where a time-of-use electricity price *price(t)* represents the real-time electricity price at t time; $P_{\text{grid}}(t)$ represents the active power transmitted from the upper grid to the distribution region at t time; N represents a number of a photovoltaic generator set and fans installed; $P_{\text{wt}}'(t)$ and $P_{i,\text{wt}}(t)$ respectively represent the active power emitted by the i-th fan at time t and the active power actually injected into the node; $P_{\text{pv}}'(t)$ and $P_{i,\text{pv}}(t)$ respectively represent an active power generated by the i-th photovoltaic power supply at t time and an active power actually utilized; $K_{\text{ess}}$ represents a cost coefficient of energy storage charging and discharging; N represents a number of energy storage installations; $P_{i,\text{dis}}(t)$ and $P_{i,\text{ch}}(t)$ respectively represent the charging and discharging power of the i-th energy storage device at t time; $\phi_1$ represents a set of all branches in the system; $I_{ij}$ and $R_{ij}$ represent a current and a resistance on tie lines of a region i and a region j, respectively.

Further, the constraints of the multi-objective optimization model include: involving a state constraint, power constraint and capacity constraint of the energy storage; involving the upper and lower limits of output of wind and solar power units of distributed energy; involving capacity and transmission power constraints at different ports of a flexible interconnect device; for a whole system, involving the system power flow constraints and safety constraints including voltage and current.

Step 3: constructing a method for determining a self-adaptive weight coefficient of the multi-objective optimization function according to requirements of the system operation status in an actual operation process and an influence of a voltage deviation on the system operation.

Based on the above-mentioned requirements for different operating states of the system and the established optimization model, an adaptive weight coefficient among the multi-objectives optimization functions that change in real time is constructed.

When the system is in the normal voltage operation, the weight factor is set to:

$$\begin{cases} \alpha_1 = \varepsilon_1 + \varepsilon_2 \dfrac{F_{1,\max,0}'}{U_{\max}^2 - U_{\min}^2} \\ \alpha_3 = 0 \end{cases}$$

$$\alpha_1 + \alpha_2 + \alpha_3 = 1$$

when the system is in the voltage warning state, the weight coefficient is set as:

$$\begin{cases} \alpha_1 = \varepsilon_1 + \varepsilon_2 \dfrac{F_{1,\max,0}}{U_{\max}^2 - U_{\min}^2} \\ \alpha_2 = \alpha_1 / 2 \\ \alpha_3 = 0 \end{cases}$$

when the system is in the secondary voltage recovery state, the weight coefficient is set to:

$$\begin{cases} \alpha_1 = \varepsilon_1 + \varepsilon_2 \dfrac{F_{1,\max,0}}{U_{\max}^2 - U_{\min}^2} \\ \alpha_2 = 0 \end{cases}$$

$$\alpha_1 + \alpha_2 + \alpha_3 = 1$$

where, $\alpha_1$, $\alpha_2$ and $\alpha_3$ respectively represent the weight coefficients of different optimization objectives; $\varepsilon_1$ and $\varepsilon_2$ represent a voltage deviation weighting coefficient and a voltage deviation linearization coefficient, respectively; $F_{1,\max,0}$ represents an optimized objective value considering voltage deviation at a node with maximum voltage deviation at t time before optimization; $U_{\max}$ and $U_{\min}$ represent a maximum and minimum voltage values, respectively.

Step 4: iteratively solving an optimization model to obtain the optimization scheduling scheme after converting the optimization model into a second-order cone programming model with a self-adaptive relaxation gap.

The optimization model is linearized and convexified, and converted into a second-order cone optimization model that is easier to solve. Moreover, a penalty term based on the second-order cone relaxation gap and a cutting plane constraint are added to the optimization model. By constructing a penalty term related to the model relaxation gap, comparing the relaxation gap of the obtained result with the threshold value during the iterative process, and continuously updating the penalty term coefficient, the accuracy of the relaxation constraint can be effectively improved.

FIG. 2 is a schematic diagram of a flexible interconnected low-voltage power power distribution region containing a flexible interconnection device designed based on the self-adaptive optimization scheduling method applied to the flexible interconnected low-voltage power power distribution region. The structure of the Back to Back Voltage Source Converter (B2B-VSC) is often used in the distribution network of low-voltage levels. Two VSCs are connected through a DC link, and the structure is simple. In order to verify the effectiveness and practicality of the above-mentioned optimized scheduling method for the adaptive system operation state of the flexible interconnected low-voltage power power distribution region, this embodiment uses the IEEE 33-node system as a test system for verification, and the system structure diagram is shown in FIG. 3. In the FIG. 3, the node 33 is connected to the superior power grid, and the remaining nodes are the access nodes of the high-voltage side of the transformers in different distribution regions. The entire system includes 3 flexible interconnection switches located at (7, 20), (17, 32) and (24, 28) respectively, two fans are located at node 20 and node 32 respectively, 2 photovoltaic generators are located at node 20 and node 32 respectively, and 3 energy storage devices are located at node 15, node 20 and node 32 respectively. The reference voltage of the system is 12.66 kV, and the reference capacity is 100 MVA. When considering the economic efficiency of the system operation, time-of-use electricity prices are introduced, and the time-of-use electricity prices are shown in Table 1.

Table 1 Time-of-Use Electricity Prices

| Period | Time | Electricity Prices/ (Yuan·(kW·h)$^{-1}$ ) |
|---|---|---|
| Flat period | 05:00-07:00<br>11:00-16:00 | 0.8 |
| Peak Period | 08:00-10:00<br>17:00-22:00 | 1.2 |

(continued)

| Period | Time | Electricity Prices/ (Yuan·(kW·h)$^{-1}$ ) |
|---|---|---|
| Valley Period | 00:00-04:00<br>23:00-24:00 | 0.4 |

When verifying the algorithm, a wind and light abandonment cost $C_{DG}$ of distributed energy is taken as 2.5 (Yuan·(kW·h)-1), the cost coefficient $K_{ess}$ of charging and discharging of energy storage is taken as 1 (Yuan·(kW·h)-1), and the compensation cost $c_{load}$ of flexible load of the system is taken as 1 (Yuan·(kW·h)-1). The linearization coefficients $\varepsilon_1$ and $\varepsilon_2$ of the voltage deviation weight coefficient $\alpha_1$ are taken as 0.3 and 0.7 respectively.

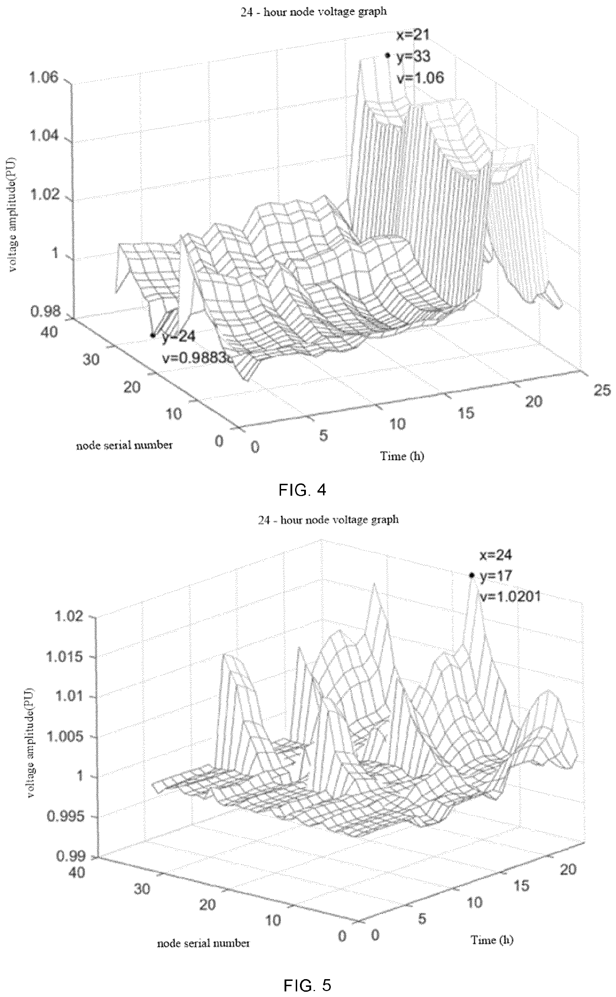

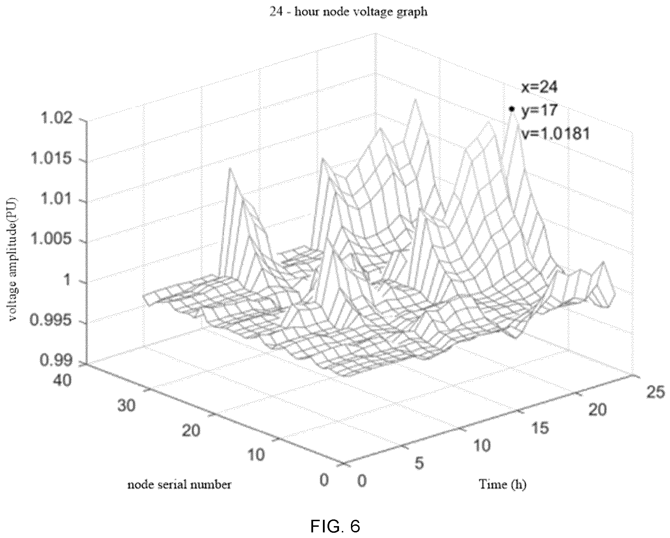

The MATLAB software is used to simulate the flexible interconnected power distribution region. The method proposed in this embodiment is used for operation optimization, and the system operation data is measured and collected to obtain the node voltage values of 33 power distribution regions and the operation loss cost within 24 hours. When conducting simulation experiments to verify the effectiveness of the method proposed in this embodiment, the system without using the SOP, the system with fixed weight coefficients and the method proposed in this embodiment are respectively used to optimize the operation of the system. The 24-hour node voltages obtained under different methods are shown in FIG.s 4-6. The output voltage diagram of the high-voltage side of the transformers in each distribution region obtained by the optimized scheduling strategy of the system without using the flexible interconnection device applied to the low-voltage power power distribution region is shown in FIG. 4. The output voltage diagram of the high-voltage side of the transformers in each distribution region obtained by the optimized operation strategy with fixed weight coefficients applied to the flexible interconnected low-voltage power power distribution region is shown in FIG. 5. The output voltage diagram of the high-voltage side of the transformers in each distribution region obtained by the above-mentioned optimized scheduling strategy of the adaptive system operation state applied to the flexible interconnected low-voltage power power distribution region is shown in FIG. 6. It can be clearly seen from the comparison in the figures that the method proposed in this embodiment has a better effect of suppressing voltage fluctuations. The loss cost during the system operation is shown in Table 2.

Table 2 Loss Cost during System Operation

| Method | Consumption cost (yuan) |
|---|---|
| Flexible interconnection device | 4.0593e+03 |
| Fixed weight coefficient | 3.9280e+03 |
| Method provided in embodiments of the present application | 3.9274e+03 |

It can be clearly seen that, since the method proposed takes into account the influence of the system operation state on the optimization objectives, it can adaptively adjust the weight coefficients of the optimization objectives according to the system voltage fluctuation situation, making the economic efficiency and stability of the optimized operation strategy better. Thus, it can better suppress voltage fluctuations, avoid the voltage exceeding the safe range, and ensure the economic efficiency of the operation system at the same time.

The above is only a preferred specific implementation mode of the present application, but the protection scope of the present application is not limited thereto. Any those skilled in the art within the technical scope disclosed by the present application, according to the technical solution of the present application and its inventive concept, making equivalent replacements or changes shall be covered within the protection scope of the present application.

**Claims**

1. A self-adaptive optimization scheduling method applied to a flexible interconnected low-voltage power distribution region, **characterized by** comprising:

    Step 1: classifying an operation status of a system based on a maximum voltage deviation range of each distribution region in the system, and considering requirements of different operation statuses, formulating an optimization scheduling scheme of the system within different voltage ranges;
    Step 2: taking a voltage deviation of each distribution region, an operation cost considering an operation network loss, and a user satisfaction on a load side as an optimization objectives, and taking power constraints of controllable devices in the system, a system operation power flow constraint, and a system operation safety constraint as constraint conditions to construct a multi-objective optimization scheduling model;

Step 3: constructing a method for determining a self-adaptive weight coefficient of the multi-objective optimization function according to requirements of the system operation status in an actual operation process and an influence of a voltage deviation on the system operation;

Step 4: iteratively solving an optimization model to obtain the optimization scheduling scheme after converting the optimization model into a second-order cone programming model with a self-adaptive relaxation gap.

2. The self-adaptive optimization scheduling method according to claim 1, wherein in step 1, the operation status of the system is classified by monitoring the maximum voltage deviation on a high-voltage side of a transformer in each distribution region; and

the operation status of the system is divided into a normal voltage status, a voltage warning status, and a secondary voltage recovery status.

3. The self-adaptive optimization scheduling method according to claim 2, wherein the requirements under different operation statuses of the system are as follows:

when the system is in the normal voltage status, the system has sufficient economic scheduling margin, the optimization objective mainly considers economy;

when the system is in the voltage warning status, although a voltage fluctuation is within an allowable range, any external interference will cause the voltage deviation of the system to deviate from the allowable range, threatening a safe operation of the system, the optimization objective is mainly to ensure voltage stability, while considering the economy; and

when the system is in the secondary voltage recovery status, emergency measures such as load shedding need to be taken to restore a voltage of the system to the normal or warning status, the optimization objective is to ensure the requirements of the user satisfaction as much as possible on a premise of ensuring the voltage deviation of the system.

4. The self-adaptive optimization scheduling method according to claim 1, wherein in step 2, an optimization calculation formula of the multi-objective optimization scheduling model is as follows:

$$\min F = \alpha_1 F_1 / F_{1,0} + \alpha_2 F_2 / F_{2,0} + \alpha_3 F_3 / F_{3,0} ,$$

where, $F$ represents an overall optimization objective function and $\min F$ represents a minimization optimization objective function; $F_1$, $F_2$ and $F_3$ respectively represent taking voltage deviation, a system operation cost and the user satisfaction as objective functions of the optimization objectives; $F_{1,0}$, $F_{2,0}$ and $F_{3,0}$ respectively represent the voltage deviation value, the system operation cost and the user satisfaction obtained before optimization; $\alpha_1$, $\alpha_2$ and $\alpha_3$ represent weight coefficients of different optimization objectives respectively; wherein,

$$F_1 = \sum_{k=1}^{m} \left| U_k^2(t) - 1 \right|$$

$$F_2 = C_{\mathrm{pur}} + C_{\mathrm{DG}} + C_{\mathrm{loss}} + C_{\mathrm{ESS}}$$

$$F_3 = c_{\mathrm{load}} \Delta P_{\mathrm{load}} = c_{\mathrm{load}} \left| P_{\mathrm{u}}^{\mathrm{tr}}(t) - P_{\mathrm{d}}^{\mathrm{tr}}(t) - P_{\mathrm{d}}^{\mathrm{in}}(t) \right|$$

where m represents a total number of distribution regions; $U_k(t)$ represents a voltage value on the high-voltage side of the transformer in a k-th distribution region at time t; $C_{\mathrm{pur}}$ represents a power purchase cost from the distribution region to an upper grid; $C_{\mathrm{DG}}$ represents a cost of wind and light abandonment for distributed energy; $C_{\mathrm{loss}}$ represents a power loss cost of the system; $C_{\mathrm{ESS}}$ represents a charge and discharge cost of energy storage;

$\Delta P_{\mathrm{load}}$ represents a fluctuation amount of a flexible load active power; $P_{\mathrm{u}}^{\mathrm{tr}}(t)$ represents a transferable load increased at time t; $P_{\mathrm{d}}^{\mathrm{tr}}(t)$ represents a reducible load reduced at time t; $P_{\mathrm{d}}^{\mathrm{in}}(t)$ represents a transferable load reduced at time t; $c_{\mathrm{load}}$ represents a cost of compensation for load changes.

**5.** The self-adaptive optimization scheduling method according to claim 4, wherein the power purchase cost $C_{\mathrm{pur}}$ of the distribution region to the upper grid, a wind and light abandonment cost $C_{\mathrm{DG}}$ of distributed energy, the power loss cost $C_{\mathrm{loss}}$ of the system and the charging and discharging cost $C_{\mathrm{ESS}}$ of energy storage are calculated;

$$C_{\mathrm{pur}} = \sum_{t=1}^{24} price(t) P_{\mathrm{grid}}(t)$$

$$C_{\mathrm{DG}} = \sum_{t=1}^{24} c_{\mathrm{DG}} \sum_{i=1}^{N} \left[ \left( P_{\mathrm{wt}}'(t) - P_{i,\mathrm{wt}}(t) \right) + \left( P_{\mathrm{pv}}'(t) - P_{i,\mathrm{pv}}(t) \right) \right]$$

$$C_{\mathrm{loss}} = \sum_{t=1}^{24} price(t) \sum_{i,j \in \phi_1} I_{ij}^2(t) R_{ij}$$

$$C_{\mathrm{ESS}} = K_{\mathrm{ess}} \sum_{t=1}^{24} \sum_{i=1}^{n} \left( P_{i,\mathrm{dis}}(t) + P_{i,\mathrm{ch}}(t) \right)$$

where a time-of-use electricity price $price(t)$ represents the real-time electricity price at t time; $P_{\mathrm{grid}}(t)$ represents the active power transmitted from the upper grid to the distribution region at t time; N represents a number of a photovoltaic generator set and fans installed; $P_{\mathrm{wt}}'(t)$ and $P_{i,\mathrm{wt}}(t)$ respectively represent the active power emitted by the i-th fan at time t and the active power actually injected into the node; $P_{\mathrm{pv}}'(t)$ and $P_{i,\mathrm{pv}}(t)$ respectively represent an active power generated by the i-th photovoltaic power supply at t time and an active power actually utilized; $K_{\mathrm{ess}}$ represents a cost coefficient of energy storage charging and discharging; N represents a number of energy storage installations; $P_{i,\mathrm{dis}}(t)$ and $P_{i,\mathrm{ch}}(t)$ respectively represent the charging and discharging power of the i-th energy storage device at t time; $\phi_1$ represents a set of all branches in the system; $I_{ij}$ and $R_{ij}$ represent a current and a resistance on tie lines of a region i and a region j, respectively.

**6.** The self-adaptive optimization scheduling method according to claim 4, wherein in step 2, the constraints of the multi-objective optimization model comprise:

involving a state constraint, power constraint and capacity constraint of the energy storage;
involving the upper and lower limits of output of wind and solar power units of distributed energy;
involving capacity and transmission power constraints at different ports of a flexible interconnect device; and
for a whole system, involving the system power flow constraints and safety constraints including voltage and current.

**7.** The self-adaptive optimization scheduling method according to claim 1, wherein in step 3, constructing a method for determining a self-adaptive weight coefficient of the multi-objective optimization function according to requirements of the system operation status in an actual operation process and an influence of a voltage deviation on the system operation;

when the system is in the normal voltage operation, the weight factor is set to:

$$\begin{cases} \alpha_1 = \varepsilon_1 + \varepsilon_2 \dfrac{F_{1,\max,0}}{U_{\max}^2 - U_{\min}^2} \\ \alpha_3 = 0 \end{cases}$$

$$\alpha_1 + \alpha_2 + \alpha_3 = 1$$

when the system is in the voltage warning state, the weight coefficient is set as:

$$\begin{cases} \alpha_1 = \varepsilon_1 + \varepsilon_2 \dfrac{F_{1,\max,0}}{U_{\max}^2 - U_{\min}^2} \\ \alpha_2 = \alpha_1 / 2 \\ \alpha_3 = 0 \end{cases}$$

when the system is in the secondary voltage recovery state, the weight coefficient is set to:

$$\begin{cases} \alpha_1 = \varepsilon_1 + \varepsilon_2 \dfrac{F_{1,\max,0}}{U_{\max}^2 - U_{\min}^2} \\ \alpha_2 = 0 \end{cases}$$

$$\alpha_1 + \alpha_2 + \alpha_3 = 1$$

where, $\alpha_1$, $\alpha_2$ and $\alpha_3$ respectively represent the weight coefficients of different optimization objectives; $\varepsilon_1$ and $\varepsilon_2$ represent a voltage deviation weighting coefficient and a voltage deviation linearization coefficient, respectively; $F_{1,\max,0}$ represents an optimized objective value considering voltage deviation at a node with maximum voltage deviation at t time before optimization; $U_{\max}$ and $U_{\min}$ represent a maximum and minimum voltage values, respectively.

8. The self-adaptive optimization scheduling method according to claim 1, wherein in step 4, converting the model into a second-order cone programming model with a gradually tightened relaxation gap:
by adding a penalty term based on the second-order cone relaxation gap in the optimization objective and adding a cutting plane in the constraint conditions, ensuring that each iterative solution process is able to adapt to a relaxation gap of the model after the second-order cone transformation, accelerating a solution speed to ensure a solution accuracy.

9. The self-adaptive optimization scheduling method according to claim 1, wherein the self-adaptive optimization scheduling method applied to the flexible interconnected low-voltage power distribution region selects a back-to-back power source converter as the flexible interconnection device between distribution regions;

in a typical back-to-back type SOP, the AC sides are connected to different distribution regions, and the DC sides of the VSCs are interconnected back-to-back to realize an active power exchange of the interconnected distribution regions, and a reactive power of each VSC is independent of each other, which can provide voltage and reactive power support for the connected feeder lines;
under normal circumstances, one of the VSCs adopts a constant DC voltage and a constant reactive power control mode, and remaining VSCs adopt the constant active power and a constant reactive power control mode;

each VSC in the SOP is operatable in a four-quadrant mode, but its operating power shall not exceed its rated power; the operation constraints of the back-to-back type SOP is expressed as:

$$\sqrt{P_{\text{vsc}r}\left(t\right)^2 + Q_{\text{vsc}r}\left(t\right)^2} \le S_{\text{vsc max }r}$$

$$\sum_{r=1}^{n} P_{\text{vsc}r}\left(t\right) = 0$$

where $P_{\text{vsc}r}(t)$ and $Q_{\text{vsc}r}(t)$ represent the active power and reactive power of the r-th port VSC at t time; $S_{\text{vsc max }r}$ represents a rated power of the r-th VSC; N is a number of ports;

wherein IEEE 33 nodes are used as a test system to verify the effectiveness and practicability of the self-adaptive optimization scheduling method applied to the flexible interconnected low-voltage power distribution region.

classifying an operation status of a system based on a maximum voltage deviation range of each distribution region in the system

Constructing an optimal scheduling model that takes into account the safety, economy, and reliability of system operation

Constructing the weight coefficients of the multi-objective function that adapt to the operation state of the system based on the operation state of the system and voltage deviation.

adopting second-order cone programming method with a gradually shrinking relaxation gap to transform the optimization model, and obtaining the optimal scheduling scheme for the flexible interconnection low-voltage distribution station quickly and accurately through iteration

FIG. 1

FIG. 2

FIG. 3

24 - hour node voltage graph

FIG. 4

24 - hour node voltage graph

FIG. 5

FIG. 6

# EUROPEAN SEARCH REPORT

**Application Number**

EP 25 17 3501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 388 302 B (UNIV HUNAN) 4 June 2024 (2024-06-04) * abstract * * claims 1,3 * * paragraphs [0155], [0159], [0275], [0283] * | 1-9 | INV. H02J3/06 H02J3/32 H02J3/38 G06Q10/04 G06Q50/06 G06Q10/0631 |
| A | CN 114 597 969 B (NANCHANG AVIATION UNIV) 7 April 2023 (2023-04-07) * abstract * * paragraph [0137] * * claim 1 * | 1-9 | |
| A | CN 115 663 791 A (ZIBO POWER SUPPLY CO STATE GRID SHANDONG ELECTRIC POWER CO) 31 January 2023 (2023-01-31) * abstract * * claims 1,2 * | 1-9 | |
| A | CN 110 729 765 B (UNIV SICHUAN ET AL.) 22 March 2024 (2024-03-22) * abstract * * claim 1 * | 1-9 | TECHNICAL FIELDS SEARCHED (IPC) H02J G06G |

The present search report has been drawn up for all claims

| Place of search | Date of completion of the search | Examiner |
|---|---|---|
| Munich | 1 October 2025 | Fiat, Cyrille |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 3501

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2025

| Patent document cited in search report | | Publication date | Patent family member(s) | Publication date |
|---|---|---|---|---|
| CN 116388302 | B | 04-06-2024 | NONE | |
| CN 114597969 | B | 07-04-2023 | NONE | |
| CN 115663791 | A | 31-01-2023 | NONE | |
| CN 110729765 | B | 22-03-2024 | NONE | |

EPO FORM P0459

For more details about this annex : see Official Journal of the European Patent Office, No. 12/82